# EUROPEAN PATENT SPECIFICATION

(11) **EP 0 634 092 B1**
(45) Date of publication and mention of the grant of the patent: **02.04.1997**
(21) Application number: 94610040.1
(22) Date of filing: 08.07.1994
(51) Int. Cl.: A01D 43/10, A01D 67/00

(54) **Mower**
Mähvorrichtung
Dispositif faucheur

(30) Priority: 13.07.1993 DK 837/93
(43) Date of publication of application: 18.01.1995
(73) Proprietor: JF-FABRIKEN - J. FREUDENDAHL A/S, DK-6400 Sonderborg (DK)
(72) Inventor: Freudendahl, Jörn, DK-6400 Sönderborg (DK); Nielsen, Harald Raun, DK-6470 Sydals (DK)
(74) Representative: Raffnsöe, Knud Rosenstand

(56) References cited:
- WO-A-91/11099
- FR-A- 1 296 566
- FR-A- 2 431 821
- GB-A- 2 052 237
- US-A- 3 479 805
- US-A- 4 724 661
- US-A- 4 930 295

## Description

The present invention relates to a mower comprising a windrower aggregate provided with a knife aggregate and a conditioning device, said windrower aggregate being movably suspended by means of rigid articular bars and at least one spring in a carrier frame, the knife aggregate comprising several knife means mounted along an axis.

Such a mower is known from DK-A-267/90 which describes a towed windrower, in which the windrower aggregate is suspended by means of articular bars mounted in two planes above each other and a spring relieving the ground pressure of the windrower aggregate. The knife aggregate is hinged to the windrower aggregate at its rear edge and may thereby swing between two stops.

Another mower of the art mentioned above and in the preamble of claim 1 is disclosed in US-A-4 724 661. The mower disclosed therein comprises a windrowing aggregate or header which by means of parallel upper and lower links and spring means is suspended in a carrier frame. The header is divided into a first and a second header section, whereby the second header section by means of parallel upper and lower links and spring means is suspended in the first header section. Thereby two different vertical motions are possible, namely the header as a whole in relation to the carrier frame and the second header section in relation to the first header section. The second header section is angularly ajustable in relation to the first header section by virtue of a slot mechanism in the upper link between the two header sections. During operation the slot mechanism will be locked.

The cutting of modern mowers is so effective that the travelling speed is only impeded by the danger of a breakdown due to the encounter with a stone or the like. It is, therefore, of importance that the ability of the knife aggregate to lift itself over irregularities in the ground is the best possible.

The object of the invention is therefore to improve the ability of the knife aggregate to lift itself over irregularities in the ground.

This object is met by a mower of the type mentioned by way of introduction, which mower is characterised in that the windrower aggregate is suspended such that during operation it is able to pivot in relation to the carrier frame around a second axis which is substantially parallel with the first-mentioned axis, and in that at least one second spring influencing the pivoting of the windrower aggregate around said second axis is provided. In this way an additional relief of the pressure on the field is attained and consequently a smaller power impact between an irregularity and the knife aggregate. Due to the fact that the windrower aggregate swings as a whole, a hinging of the knife aggregate relative to the rest of the windrower aggregate is avoided, whereby a big rigidity is attained. The rigidity is necessitated to prevent a distortion of the knife aggregate in case it meets an irregularity outermost of one of its sides, which might cause problems with the power transmission. The articular bars may suitably be substantially in one single plane and define the second axis at their connections with the windrower aggregate.

The afore-mentioned at least one spring may act between the articular bars and the carrier frame, or it may act between the carrier frame and the windrower aggregate, when it strains the latter substantially on the second axis. The second spring is preferably a tension spring which acts between the upper part of the windrower aggregate and the carrier frame and extends in a plane substantially parallel with the plane of the articular bars. Hereby is achieved that the two springs exert each their movement, the first spring influencing the upwards and downwards movement of the windrower aggregate as a whole in adjustment to elongate irregularities, while the other spring influences the swinging of the windrower aggregate around the hinge axis of the hinging of the articular bars to the windrower aggregate, which swinging provides a quick adaptation to minor irregularities.

In some cases it is desirable also to have the possibility of separately lifting the windrower aggregate. This applies in particular to front suspended machines, while front lifts for tractors are not standardized.

Consequently, the machine according to the invention comprises in an embodiment power means, such as hydraulic cylinders, which are mounted between the carrier frame and at least some of the articular bars in order to lift the windrower aggregate when activated. Alternatively, a power means, such as a hydraulic cylinder, may be provided between the carrier frame and the windrower aggregate to lift the latter when activated, whereby a line through the straining points of the power means on the carrier frame and the windrower aggregate, respectively, substantially intersects the second axis.

In an embodiment particularly apapted to be used in connection with the front lift of a tractor the mower comprises as additional equipment a tension member, such as a chain, for limiting the downwards movement of the front lift. Thereby is achieved that the lower position of a not standardized front lift can be determined to fit the mower.

The invention will be explained in detail in the following with reference to the schematic drawing, in which
Fig. 1 shows a lateral view of a towed mower according to the invention,
Fig. 2 a lateral view of a front suspended mower according to the invention, and
Fig. 3 a view of the mower according to Fig. 2 seen from above.

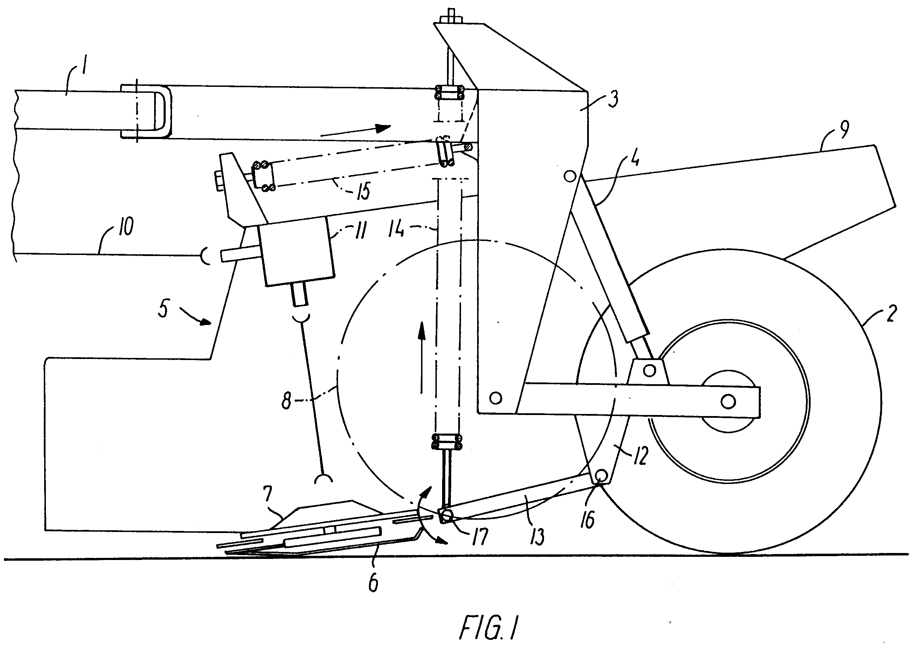

Thus, Fig. 1 shows a towed mower with a pull rod 1, ground wheels 2 and a carrier frame 3. The ground wheels 2 can by means of the hydraulic cylinders 4 be moved between the operating position shown and a relative thereto lowered transport position.

The mower further comprises a windrower aggregate 5 with a cutter bar 6 with knife discs 7, a conditioning and throwing rotor 8 and windrower screens 9. Power for the operation of the knife discs 7 and the conditioning and throwing rotor 8 is transferred from the power take-off of a towing tractor through a drive shaft 10 over an angular gear 11 which is fixedly mounted on the windrower aggregate 5.

The windrower aggregate 5 is connected with the carrier frame 3 by a part 12, which is fixed relative thereto during operation, via articular bars 13, of which at least two are present in a common plane. A tension spring 14 is connected with the articular bar 13, said spring being in turn connected with the carrier frame 3. The tension spring 14 thus partially carries the windrower aggregate 5 during operation. As described until now, the mower shown is known per se. However, the mower shown comprises a second tension spring 15 acting between the upper part of the windrower aggregate 5 and the carrier frame 3.

By the construction shown a lifting of the windrower aggregate 5 as a whole is achieved, when it meets an elongate irregularity on the ground, the articular bars 13 pivoting around their hinge axis 16 relative to the carrier frame 3 and the tension spring 14 contracting. Thereby the movement of the windrower aggregate 5 becomes substantially purely translatory.

When passing minor irregulatories on the field, the windrower aggregate 5 pivots around the second hinge axis 17 of the articular bars 13 at the connection with the windrower aggregate 5, the second tension spring 15 contracting. This distribution between the two types of movement is due to the difference of inertia. The two springs 14 and 15 or spring systems, as in practice several parallelly disposed will be present, thus supplement each other, the spring 15 adapting quickly to minor irregularities, whereas the spring 14 adapts more slowly to elongate irregularities. The two springs or spring systems are preferably dimensioned and adjusted in such a way that a ground pressure of 300-400 N is attained.

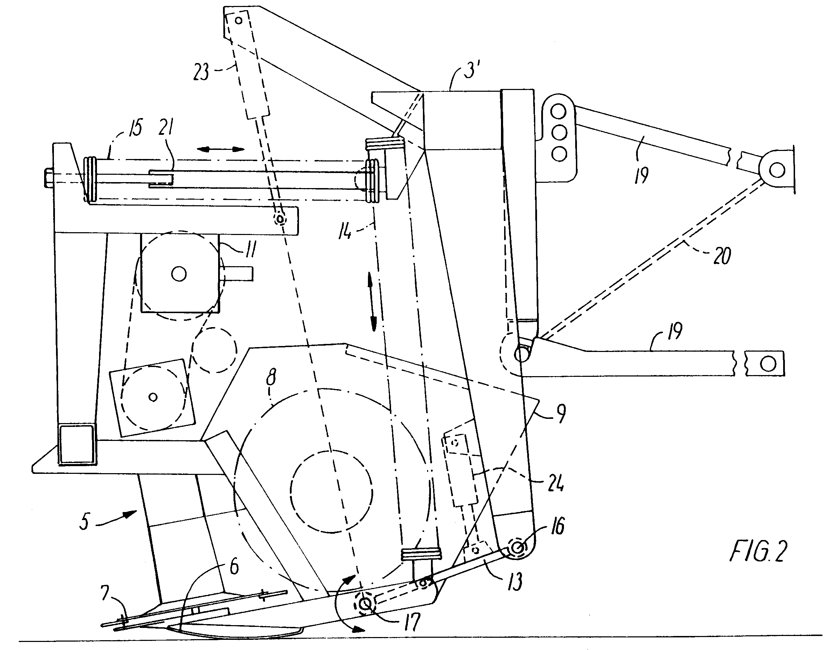

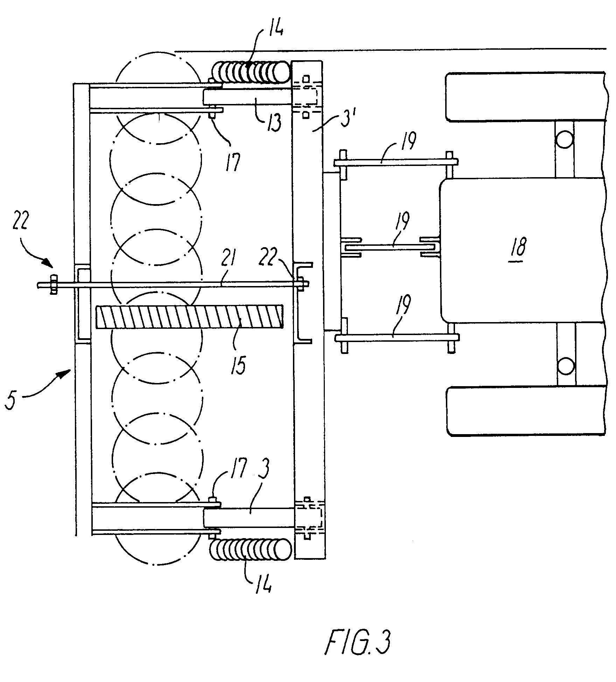

Figs. 2 and 3 show a front suspended embodiment of the mower according to the invention. Thus the front end of a tractor 18 with front lift arms 19, in which the carrier frame 3' of the mower, is shown. A chain 20 determines the lower position of the lift arms 19 and consequently that of the carrier frame 3'. Thereby, a fixed lower position is defined by adjustment of the length of the chain 20, which is a desirable possibility, because tractor front suspensions are not standardized.

The front suspended mower itself comprises substantially the same elements as the towed mower described above. Among the differences can be mentioned that the spring 14 is connected with the articular bar 13 at a distance from the hinge axis 17. Moreover, a rod 21 is disposed parallelly with the spring 15 with end stops 22 for limiting the swing of the spring 15 and thereby the swing of the windrower aggregate 5 around the axis 17.

In connection with the suspension of the windrower aggregate 5 hydraulic cylinders for lifting the windrower aggregate 5 have been provided. Two different positions are shown, of which only one will be used in a specific embodiment. When positioning these lifting cylinders it is important to ensure that they do not, when activated, impart a moment to the windrower aggregate which stresses the spring 15 unnecessarily.

Therefore, as a possibility, a single hydraulic cylinder 23 has been provided, which acts between the carrier frame 3 and the windrower aggregate 5 itself. As shown with a dotted line, the cylinder 23 points towards the connecting axis 17, for which reason it does not impart any moment to the windrower aggregate around this axis.

Another possibility is that several hydraulic cylinders 24 act between the articular bars 13 and the carrier frame 3'. This positioning is advantageous in connection with a wide machine as the one shown in Fig. 3, as the wide machine has a dissimilar sideways weight distribution and consequently can be lifted with more control, when lifted at both its ends.

## Claims

1. A mower comprising a windrower aggregate (5) provided with a knife aggregate (6) and a conditioning device (8), said windrower aggregate being movably suspended by means of rigid articular bars (13) and at least one spring (14) in a carrier frame (3,12), the knife aggregate (6) comprising several knife means mounted along a first axis,
**chararacterized** in that the windrower aggregate (5) is suspended such that during operation it is able to pivot in relation to the carrier frame (3, 12) around a second axis (17) which is substantially parallel with the first-mentioned axis, and in that at least one second spring (15) influencing the pivoting of the windrower aggregate (5) around said second axis (17) is provided.

2. A mower according to claim 1, **characterized** in that the articular bars (13) are provided in substantially one single plane, and in that their connections (17) with the windrower aggregate (5) define the second axis.

3. A mower according to claim 1 or 2, **characterized** in that said at least one spring (14) acts between the articular bars (13) and the carrier frame (3,3').

4. A mower according to claim 1 or 2, **characterized** in that said at least one spring (14) acts between the carrier frame (3) and the windrower aggregate (5) and that on the latter the straining point is substantially on the second axis (17).

5. A mower according to claims 1-4, **characterized** in that the second spring comprises a tension spring (15) acting between the upper part of the windrower aggregate (5) and the carrier frame (3) and in that it extends in a plane substantially parallel with the plane of the articular bars (13).

6. A mower according to claims 1-5, **characterized** in that power means such as hydraulic cylinders (24) are mounted between the carrier frame (3') and at least some of the articular bars (13) in order to lift the windrower aggregate (5) when activated.

7. A mower according to claims 1-5, **characterized** in that a power means, such a hydraulic cylinder (23), is provided between the carrier frame (3') and the windrower aggregate (5) to lift the latter when activated, and in that a line through the straining points of the power means (23) on the carrier frame (3') and the wind-rower aggregate (5), respectively, substantially intersects the second axis (17).

8. A mower according to claim 6 or 7 and adapted to be connected with the front lift (19) of a tractor, **characterized** in that as additional equipment it comprises a tension member, such as a chain (20), for limiting the downwards movement of the front lift (19).

## Patentansprüche

1. Mähmaschine umfassend eine mit einer Messervorrichtung (6) und einer Konditionierungsanordnung (8) versehenen Mähvorrichtung (5), welche mittels fester Gelenkstangen (13) und zumindest einer in einem Tragrahmen (3,12) angeordneten Feder (14) beweglich aufgehängt ist, wobei die Messervorrichtung (6) mehrere auf einer ersten Achse entlang montierte Schneidmittel umfasst, dadurch **gekennzeichnet**, dass die Mähvorrichtung (5) derart aufgehängt ist, dass sie sich während des Betriebs im Verhältnis zum Tragrahmen (3, 12) um eine zweite zur vorerwähnten Achse im wesentlichen parallele Achse (17) drehen lässt, und dass zumindest eine zweite Feder (15) vorhanden ist, welche das Drehen der Mähvorrichtung (5) um die erwähnte zweite Achse (17) beeinflusst.

2. Mähmaschine nach Anspruch 1, dadurch **gekennzeichnet**, dass sich die Gelenkstangen (13) im wesentlichen auf derselben Ebene befinden, und dass ihre Verbindungen (17) mit dem Mähvorrichtung (5) die zweite Achse festlegen.

3. Mähmaschine nach Anspruch 1 oder 2, dadurch **gekennzeichnet**, dass zumindest eine Feder (14) zwischen den Gelenkstangen (13) und dem Tragrahmen (3,3') im Einsatz ist.

4. Mähmaschine nach Anspruch 1 oder 2, dadurch **gekennzeichnet**, dass die erwähnte zumindest eine Feder (14) zwischen dem Tragrahmen (3) und der Mähvorrichtung (5) im Einsatz ist, wobei sich der Belastungspunkt derselben im wesentlichen auf der zweiten Achse (17) befindet.

5. Mähmaschine nach Anspruch 1-4, dadurch **gekennzeichnet**, dass die zweite Feder eine zwischen dem oberen Teil der Mähvorrichtung (5) und dem Tragrahmen (3) funktionierende Zugfeder (15) umfasst, welche sich im wesentlichen parallel zur Ebene der Gelenkstangen (3) erstreckt.

6. Mähmaschine nach Anspruch 1-5, dadurch **gekennzeichnet**, dass zwischen dem Tragrahmen (3') und zumindest einigen der Gelenkstangen (13) Kraftübertragungsmittel, wie beispielsweise ein Hydraulikzylinder (24), montiert sind, damit die Mähvorrichtung (5) durch deren Betätigung angehoben werden kann.

7. Mähmaschine nach Anspruch 1-5, dadurch **gekennzeichnet**, dass zwischen dem Tragrahmen (3') und der Mähvorrichtung (5) ein Kraftübertragungsmittel, wie beispielsweise ein Hydraulikzylinder (23), vorgesehen ist, damit die letztere durch dessen Betätigung angehoben werden kann, und dass eine durch die Belastungspunkte der Kraftübertragungsmittel (23) auf dem Tragrahmen (3') bzw. der Mähvorrichtung (5) verlaufende Linie im wesentlichen die zweite Achse schneidet.

8. Mähmaschine nach Anspruch 6 oder 7, und für die Montage am Frontlift (19) eines Schleppers vorgesehen, dadurch **gekennzeichnet**, dass sie zwecks des Bewegungsbegrenzens des Frontlifts (19) in abwärtsgehender Richtung als zusätzliche Ausrüstung ein Zugglied, wie etwa eine Kette (2), umfasst.

## Revendications

1. Faucheuse comprenant un dispositif faucheur (5) pourvu d'un dispositif à couteaux (6) et un dispositif de conditionnement (8), ledit dispositif faucheur étant suspendu de façon mobile à l'aide de barres rigides d'articulation (13) et d'au moins un ressort (14) dans un cadre de support (3, 12), ledit dispositif à couteaux (6) comportant plusieurs organes de coupe montés le long d'un premier axe,
**caractérisée** en ce que le dispositif faucheur (5) est monté de telle manière qu'il peut, en service, pivoter par rapport au cadre de support (3, 12), autour d'un second axe (17) qui est essentiellement parallèle audit premier axe, et en ce qu'au moins un second ressort (15) est prévu pour influer sur le pivotement du dispositif faucheur (5) autour dudit second axe (17).

2. Faucheuse selon la revendication 1, **caractérisée** en ce que les barres d'articulation (13) sont disposées essentiellement dans un seul plan, et en ce que leurs liaisons (17) avec le dispositif faucheur (5) définissent le second axe.

3. Faucheuse selon les revendications 1 ou 2, **caractérisée** en ce que ledit au moins un ressort (14) agit entre les barres d'articulation (13) et le cadre de support (3, 3').

4. Faucheuse selon les revendications 1 ou 2, **caractérisée** en ce que ledit au moins un ressort (14) agit entre le cadre de support (3) et le dispositif faucheur (5) et en ce que sur ce dernier, le point de contrainte se situe essentiellement sur le second axe (17).

5. Faucheuse selon les revendications 1 à 4, **caractérisée** en ce que le second ressort comprend un ressort de traction (15) agissant entre la partie supérieure du dispositif faucheur (5) et le cadre de support (3) et en ce qu'il s'étend dans un plan essentiellement parallèle au plan des barres d'articulation (13).

6. Faucheuse selon les revendications 1 à 5, **caractérisée** en ce que des organes de puissance, comme par exemple des vérins hydrauliques (24), sont montés entre le cadre de support (3') et au moins certaines des barres d'articulation (13) pour relever le dispositif faucheur (5) lorsqu'ils sont actionnés.

7. Faucheuse selon les revendications 1 à 5, **caractérisée** en ce qu'un organe de puissance, comme par exemple un vérin hydraulique (23), est prévu entre le cadre de support (3') et le dispositif faucheur (5) pour, lorsqu'il est actionné, relever ce dernier, et en ce qu'une ligne passant par les points de contrainte des organes de puissance (23) sur le cadre de support (3') et le dispositif faucheur (5), respectivement, intersecte essentiellement le second axe (17).

8. Faucheuse selon les revendications 6 ou 7, et conçue pour être reliée au releveur frontal (19) d'un tracteur, **caractérisée** par le fait que comme équipement additionnel, elle comprend un moyen de tension, comme par exemple une chaîne (20), pour limiter le mouvement du releveur frontal (19) vers le bas.
